# EUROPEAN PATENT APPLICATION

(11) **EP 3 467 275 A1**
(43) Date of publication of application: **10.04.2019**
(21) Application number: 17194509.0
(22) Date of filing: 03.10.2017
(51) Int. Cl.: F01L 7/02, F01L 7/14, F02B 27/02, F02B 29/08, F02D 9/16

(54) **AN INTERNAL COMBUSTION ENGINE AND A ROTARY VALVE**

(71) Applicant: Gomecsys B.V., 1411 AR Naarden (NL)
(72) Inventor: De Gooijer, Lambertus Hendrik, 1401 EP BUSSUM (NL)
(74) Representative: De Vries & Metman

(57) **Abstract**

An internal combustion engine (1) comprises an engine cylinder (2) and a cylinder inlet passage (4) which cyclically communicate with each other via an inlet valve (3), an air inlet (5) and a rotary valve (6). The rotary valve (6) has a housing (7) including a first port (8) which is in fluid connection with one of the air inlet (5) and the cylinder inlet passage (4) and a second port (9) which is in fluid connection with the other one of the air inlet (5) and the cylinder inlet passage (4). The rotary valve (6) has also a rotatable hollow air guide cylinder (10), which is mounted in the housing (7) and drivable with respect to the housing (7) about an axis of rotation (12). The air guide cylinder (10) has a first aperture (15) in a cylindrical wall thereof which cyclically passes the second port (9) under operating conditions and a second aperture (17) through which the first aperture (15) communicates with the first port (8). The engine comprises a control system which is provided with a curved valve plate (11) which is disposed in the housing (7) at the axial position of the first aperture (15) along the axis of rotation (12) and which extends concentrically with respect to the air guide cylinder (10). The rotational position of the valve plate (11) with respect to the housing (7) is adjustable about the axis of rotation (12).

## Description

The present invention relates to an internal combustion engine comprising an engine cylinder and a cylinder inlet passage which cyclically communicate with each other via an inlet valve, an air inlet and a rotary valve, wherein the rotary valve has a housing including a first port which is in fluid connection with one of the air inlet and the cylinder inlet passage and a second port which is in fluid connection with the other one of the air inlet and the cylinder inlet passage and a rotatable hollow air guide cylinder, which is mounted in the housing and drivable with respect to the housing about an axis of rotation, wherein the air guide cylinder has a first aperture in a cylindrical wall thereof which cyclically passes the second port under operating conditions and a second aperture through which the first aperture communicates with the first port, and a control system for adjusting timing of at least one of opening and closing a passageway between the first port and the second port.

An internal combustion engine as described above is known from US 4,738,233. The known engine is provided with a rotary valve, which has a complex control system for adjusting timing of opening and closing a passage to the inlet valves of the engine.

An object of the invention is to provide an internal combustion including a rotary valve which has a simple timing adjustment control system.

This object is accomplished with the internal combustion engine according to the invention, which is characterized in that the control system is provided with a curved valve plate which is disposed in the housing at the axial position of the first aperture along the axis of rotation and which extends concentrically with respect to the air guide cylinder, and wherein the rotational position of the valve plate with respect to the housing is adjustable about the axis of rotation so as to be able to close at least a portion of the flow area through the first aperture and the second port when the first aperture passes the second port.

The adjustable rotational position of the curved valve plate provides the opportunity to locate the valve plate at different positions at the second port of the rotary valve. This means that the timing of opening or closing a passage between the inlet port and the outlet port via the cyclically passing first aperture of the air guide cylinder can be manipulated. The air guide cylinder may have a fixed coupling with a crankshaft of the engine, which makes the rotary valve relatively simple. The concentrically positioning of the curved valve plate facilitates a proper sealing between the valve plate and the air guide cylinder in order to avoid undesired leakage between them.

In a practical embodiment the first port is an inlet port which is in fluid connection with the air inlet and the second port is an outlet port which is in fluid connection with the cylinder inlet passage, and the first aperture is an outlet aperture and the second aperture is an inlet aperture, allowing air to flow from the air inlet to the cylinder inlet passage successively via the inlet port, the inlet aperture, the outlet aperture and the outlet port. This means that the air passage between the air inlet and the cylinder inlet passage is cyclically closed by the air guide cylinder relatively close to the inlet valve causing a relatively quick pressure drop in the engine cylinder and the cylinder inlet passage upon covering the outlet port within a period during which the inlet valve is still open. This is beneficial when the engine is operated according to a Miller cycle.

The valve plate may be located at the outer side of the air guide cylinder. In other words, the valve plate may be located between the air guide cylinder and the housing.

In a preferred embodiment the valve plate is a portion of a cylindrical wall of a hollow control cylinder which has a control aperture in its cylindrical wall and wherein that portion is located at the axial position of the first aperture along the axis of rotation and adjacent to the control aperture in circumferential direction of the control cylinder. In this case the cylindrical wall portion of the control cylinder next to the control aperture, as seen in circumferential direction thereof, functions as the curved valve plate. This provides the opportunity to set the rotational position of the control cylinder such that the location of opposite edges of the control aperture in circumferential direction of the control cylinder can determine the timing of at least one of opening and closing a passageway between the first port and the second port. If the control aperture has the same flow area as the second port the control cylinder can be positioned such that the control aperture is aligned with the outlet port and the mentioned timing is not influenced.

The first aperture may be located at a distance from the second aperture in axial direction of the axis of rotation. The first aperture may be located at an axial end of the air guide cylinder, for example.

In order to approach a Miller cycle the control system may be adapted for adjusting timing of closing a passageway between the first port and the second port via the first aperture. If the valve plate is reciprocatingly adjustable, this means that the valve plate must be rotated in opposite direction of the rotational direction of the air guide cylinder in order to advance timing of closing the passageway. Similarly, the air valve must be rotated in the same direction of the rotational direction of the air guide cylinder in order to delay timing of closing the passageway. It is noted that a Miller cycle can be approached with a conventional inlet valve control, which has a fixed timing that is coupled to the rotational position of the engine crankshaft.

The housing may be provided with a stop which defines a maximum rotational position of the valve plate with respect to the housing. This means that the valve plate is reciprocatingly adjustable.

In a particular embodiment, when the valve plate forms a portion of the control cylinder, the control cylinder surrounds the air guide cylinder and the stop comprises a protrusion which protrudes in the control aperture.

Preferably, the housing is integrated in a cylinder head of the engine, since this provides a compact engine and minimizes the distance between the rotary valve and the inlet valve of the engine cylinder. The latter aspect is advantageous in order to reduce pressure in the cylinder quickly during an inlet cycle of the engine when the inlet valve is still open and the rotatory valve is already closed.

The second port may have opposite edges as seen in rotational direction about the axis of rotation, whereas the width of the second port, as measured in axial direction of the axis of rotation, narrows towards one of the edges. This provides the opportunity to accurately control a flow area at the second port when the valve plate almost entirely closes the flow area through the first aperture and the second port.

The engine may be a multi-cylinder engine, wherein the rotary valve comprises a plurality of second ports and at least a same number of curved valve plates.

In a particular embodiment the curved valve plates are fixed to each other.

In a specific embodiment the first port is an inlet port which is in fluid connection with the air inlet and the second port is an outlet port which is in fluid connection with the cylinder inlet passage, and wherein the first aperture is an outlet aperture and the second aperture is an inlet aperture, allowing air to flow from the air inlet to the cylinder inlet passage successively via the inlet port, wherein the engine comprises a second engine cylinder and a corresponding second cylinder inlet passage which cyclically communicate with each other via a second inlet valve, wherein the housing of the rotary valve is provided with a second outlet port which is in fluid connection with the second cylinder inlet passage, and wherein the air guide cylinder has a second outlet aperture in the cylindrical wall thereof which cyclically passes the second outlet port under operating conditions and wherein the inlet aperture is located in the cylindrical wall of the air guide cylinder between the first and second outlet apertures in axial direction of the axis of rotation such that the inlet aperture cyclically passes the inlet port under operating conditions, wherein the control system is provided with a second curved valve plate which is disposed in the housing at the axial position of the second outlet aperture along the axis of rotation and which extends concentrically with respect to the air guide cylinder, and wherein the rotational position of the second valve plate with respect to the housing is adjustable about the axis of rotation.

Particularly, each of the outlet port and second outlet port has opposite edges as seen in rotational direction about the axis of rotation, whereas the width of only one of the outlet port and second outlet port, as measured in axial direction of the axis of rotation, may narrow towards one of the edges. This means that at low engine load the engine cylinder or the second engine cylinder may be switched-off by means of closing the cylinder inlet passage or second cylinder inlet passage, respectively, by its corresponding valve plate. The engine cylinder which cooperates with the outlet port that lacks the narrowing portion can be switched-off whereas the airflow to the remaining fired engine cylinder can be controlled accurately by adjusting the rotational position of the corresponding valve plate at the outlet port that is provided with the narrowing outlet port.

The invention is also related to a rotary valve for an internal combustion engine, comprising a housing including a first port and a second port and a rotatable hollow air guide cylinder, which is mounted in the housing and rotatable with respect to the housing about an axis of rotation, wherein the air guide cylinder has a first aperture in a cylindrical wall thereof which cyclically passes the second port upon rotating the air guide cylinder and a second aperture through which the first aperture communicates with the first port, and a control system for adjusting timing of at least one of opening and closing a passageway between the first port and the second port, wherein the control system is provided with a curved valve plate which is disposed in the housing at the axial position of the first aperture along the axis of rotation and which extends concentrically with respect to the air guide cylinder, and wherein the rotational position of the valve plate with respect to the housing is adjustable about the axis of rotation so as to be able to close at least a portion of the flow area through the first aperture and the second port.

It is noted that the rotational position of the curved valve plate or control cylinder with respect to the housing can be measured and used as an input parameter for determining engine load.

The invention will hereafter be elucidated with reference to very schematic drawings showing embodiments of the invention by way of example.
Fig. 1 is a cross-sectional view of an embodiment of an internal combustion engine according to the invention.
Fig. 2 is a perspective view of the rotary valve of the engine of Fig. 1 on a larger scale.
Fig. 3 is a cut-away view of the rotary valve of Fig. 2.
Fig. 4 is a perspective view of a part of the interior of the housing of the rotary valve as shown in Fig. 2.
Fig. 5 is an enlarged cross-sectional view of the rotary valve according to Fig. 2.
Fig. 6 is a similar view as Fig. 5, but showing a different operating condition.
Figs. 7-10 are perspective cut-away views of a part of an alternative embodiment of the internal combustion engine according to the invention.
Fig. 11 is a perspective view of the air guide cylinder of the embodiment of Figs. 7-10.

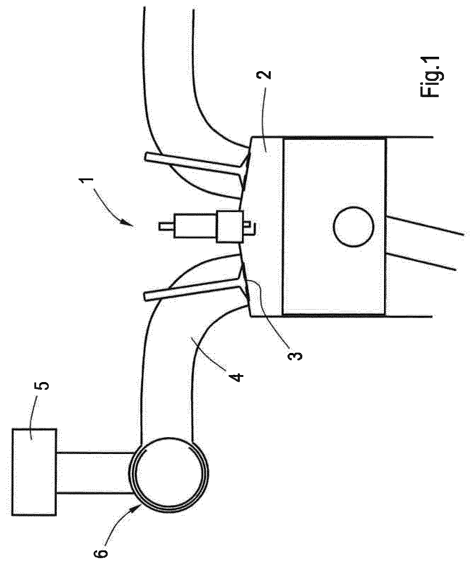

Fig. 1 shows an embodiment of an internal combustion 1 according to the invention. The engine 1 comprises a plurality of engine cylinders 2. Each of the engine cylinders 2 is provided with an inlet valve 3 for cyclically drawing air from a cylinder inlet passage 4 into the corresponding engine cylinder 2. The embodiment as shown in Fig. 1 has an air inlet 5, which may be provided with an air filter. The engine 1 is also provided with a rotary valve 6, which provides the opportunity to influence timing of airflow into the engine cylinder 2 when the inlet valve 3 is open. For example, under certain operating conditions it may be desired to stop airflow to the engine cylinder 2 before the inlet valve 3 of the engine cylinder 2 closes in order to create a Miller cycle.

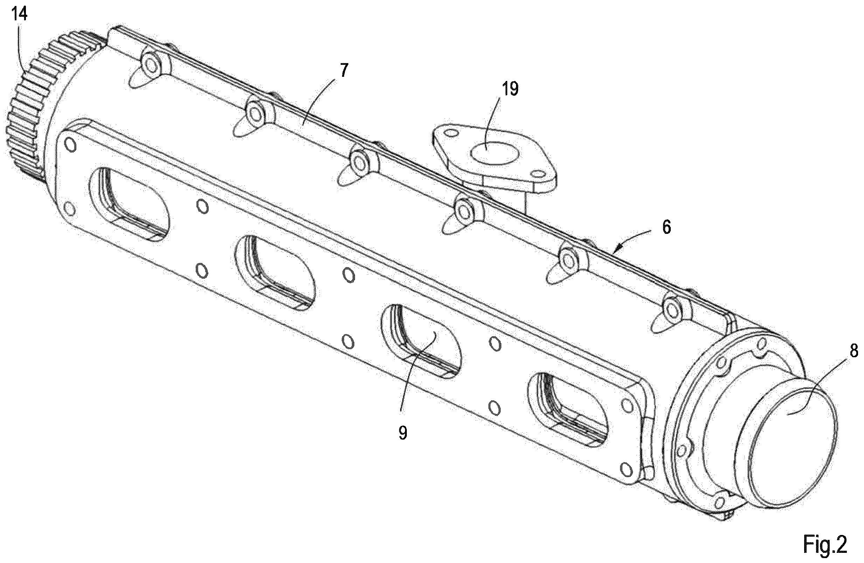

Figs. 2-6 show an embodiment of the rotary valve 6 in more detail. The rotary valve 6 has a housing 7 which is provided with an inlet port 8 and four outlet ports 9. The inlet port 8 is in fluid connection with the air inlet 5 of the engine 1 and the four outlet ports 9 are in fluid connection with the respective cylinder inlet passages 4 of the engine 1. Inside the housing 7 is a hollow air guide cylinder 10 and a hollow control cylinder 11. In the embodiment as shown in Figs. 2-6 the control cylinder 11 surrounds the air guide cylinder 10. Both cylinders 10, 11 are mounted concentrically in the housing 7 and have a common axis of rotation 12. The air guide cylinder 10 is provided with a drive shaft 13 on which a driving wheel 14 is fixed. The driving wheel 14 is mechanically coupled to a crankshaft of the engine 1, possibly via a camshaft, and rotates at half speed thereof.

The air guide cylinder 10 comprises four outlet apertures 15 at the same axial locations along the axis of rotation 12 as the outlet ports 9. In rotational direction about the axis of rotation 12 the outlet apertures 15 have mutual phase shifts such that under operating conditions the actual position of each outlet aperture 15 with respect to the corresponding outlet port 9 corresponds to timing of the corresponding inlet valve 3. Each of the outlet apertures 15 cyclically passes the corresponding outlet port 9 under operating conditions. The air guide cylinder 10 is also provided with an inlet aperture 17, which is in fluid connection with the air inlet 5 via the inlet port 8. The inlet aperture 17 is located at an axial end of the air guide cylinder 10 where the inlet port 8 is located. Since the inlet port 8 is located at an axial end of the air guide cylinder 10 the inlet port 8 and the outlet ports 9 cyclically communicate with each other through an internal space inside the air guide cylinder 10. The axial end of the air guide cylinder 10 opposite to the inlet aperture 17 is closed by a frontal wall and the drive shaft 13 is fixed to the frontal wall.

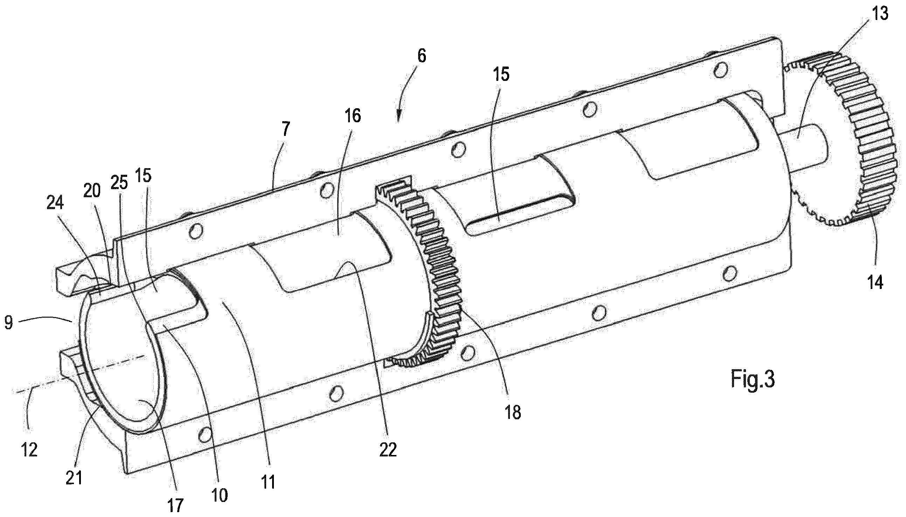

The control cylinder 11 is provided with four control apertures 16 and is also rotatable with respect to the housing 7 about the axis of rotation 12 in order to set a desired position of the control apertures 16 with respect to the outlet ports 9. Fig. 3 shows that an external gear 18 is fixed to the control cylinder 11. The external gear 18 meshes with a worm gear (not shown) to drive the control cylinder 11. The worm gear is fixed to a shaft which extends through a shaft guide 19 in the housing 7, see Fig. 2. A portion of the cylindrical wall of the control cylinder 11 which is adjacent to the control aperture 16 in circumferential direction of the control cylinder 11 and which is located at the axial position of the outlet aperture 15 along the axis of rotation 12 is considered as a curved valve plate, which serves to close at least a portion of the flow area through the outlet aperture 15 and the outlet port 9 when the outlet aperture 15 passes the outlet port 9.

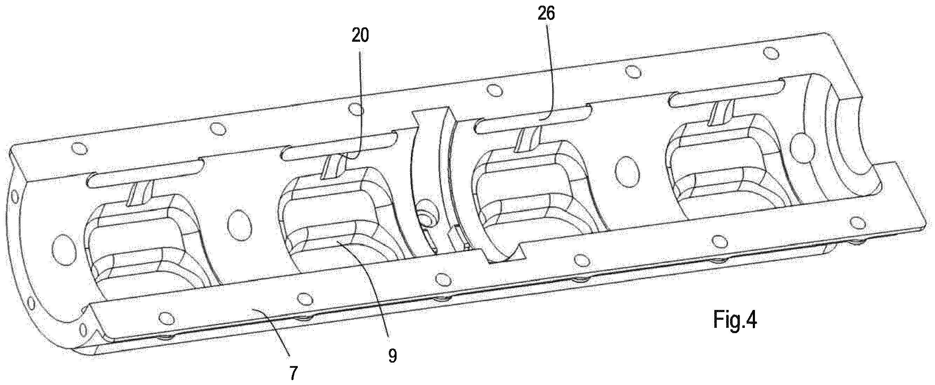

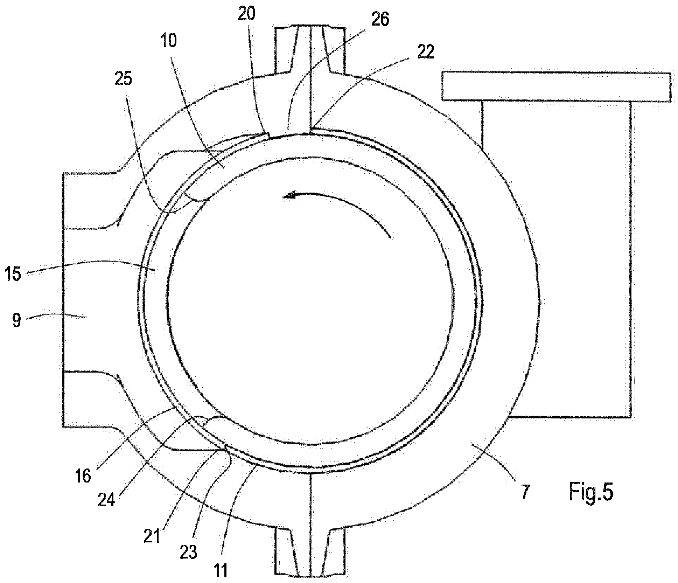

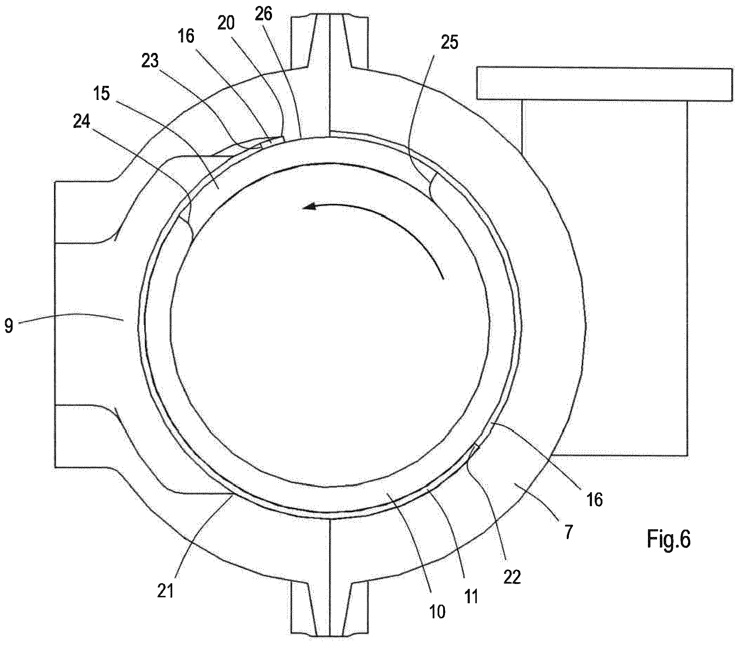

Figs. 5 and 6 show relative positions of the air guide cylinder 10 and the control cylinder 11 with respect to the housing 7 at one of the outlet ports 9. The air guide cylinder 10 rotates anti-clockwise in Figs. 5 and 6. As seen in rotational direction about the axis of rotation 12 the outlet port 9 has an opening edge 20 and an opposite closing edge 21. Fig. 4 shows the shape of the outlet port 9 in more detail. It can be seen that the width and the depth of the outlet port 9 decreases towards the opening edge 20 as seen in clockwise direction of Fig. 5.

Figs. 5 and 6 show that the control aperture 16 has an opening edge 22 and an opposite closing edge 23 as seen in rotational direction about the axis of rotation 12. Similarly, the outlet aperture 15 has an opening edge 24 and an opposite closing edge 25 as seen in rotational direction about the axis of rotation 12. Due to the mechanical coupling between the crankshaft of the engine 1 and the air guide cylinder 10 in this embodiment the outlet aperture 15 passes the corresponding closing edge 21 always at the same timing corresponding to the timing of the inlet valve 3 of the engine cylinder 2. In case of variable valve timing this may vary.

In a situation as shown in Fig. 5 the control cylinder 11 is set in a fully open position, which means that the airflow from the inlet port 8 to the outlet ports 9 is not obstructed by the control cylinder 11. When the air guide cylinder 10 rotates anti-clockwise in Fig. 5 the passage between the inlet port 8 and the outlet port 9 is opened when the opening edge 24 of the outlet aperture 15 passes the opening edge 20 of the outlet port 9 and closed when the closing edge 25 of the outlet aperture 15 passes the closing edge 21 of the outlet port 9. It is noted that in this embodiment the distance between the opening edge 22 and the closing edge 23 of the control aperture 16 is larger than the distance between the opening edge 20 and the closing edge 21 of the outlet port 9 as seen in rotational direction about the axis of rotation 12. In the situation as shown in Fig. 5 the opening edge 22 of the control aperture 16 abuts a stop 26. The stop 26 is part of the housing 7 and protrudes in the inner space thereof.

When adjusting the rotational position of the control cylinder 11 with respect to the position as shown in Fig. 5 in clockwise direction the opening edge 24 of the outlet aperture 15 will pass the opening edge 20 of the outlet port 9 at the same time as in the situation of Fig. 5, but the closing edge 25 of the outlet aperture 15 will pass the closing edge 23 of the control aperture 16 before it passes the closing edge 21 of the outlet port 9. Consequently, timing of closure of a passage between the inlet port 8 and the outlet port 9 will be advanced.

In a situation as shown in Fig. 6 the control cylinder 11 is set in an almost closed position, which means that the airflow from the inlet port 8 to the outlet ports 9 is almost entirely obstructed by the control cylinder 11. This situation may typically be selected when running the engine 1 at idle. Compared to the situation as illustrated by means of Fig. 5 the passage between the inlet port 8 and the outlet port 9 is opened at the same time when the opening edge 24 of the outlet aperture 15 passes the opening edge 20 of the outlet port 9, but it is closed earlier when the closing edge 25 of the outlet aperture 15 passes the closing edge 23 of the control aperture 16. Due to the tapered shape of the outlet port 9 at its opening edge 20, the airflow can be controlled accurately by adjusting the rotational position of the control cylinder 11 with respect to the housing 7 within that area.

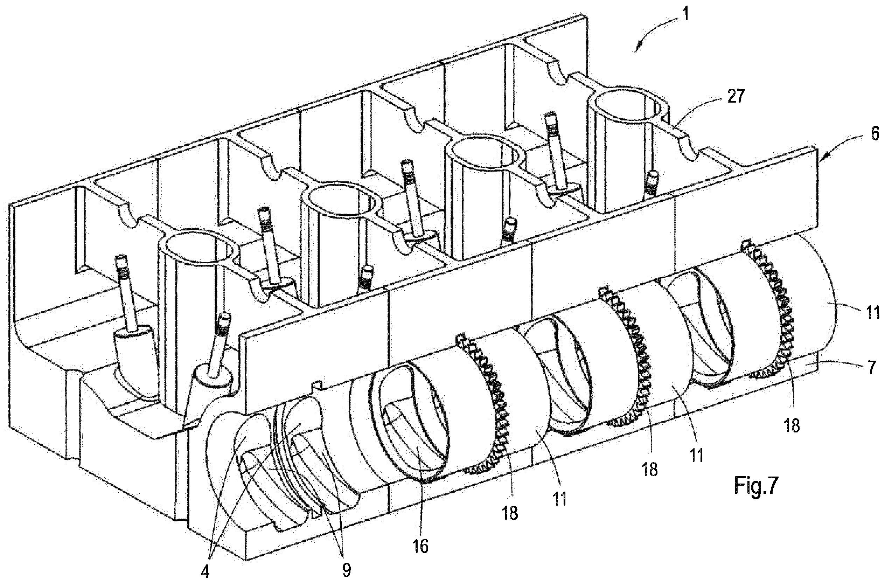

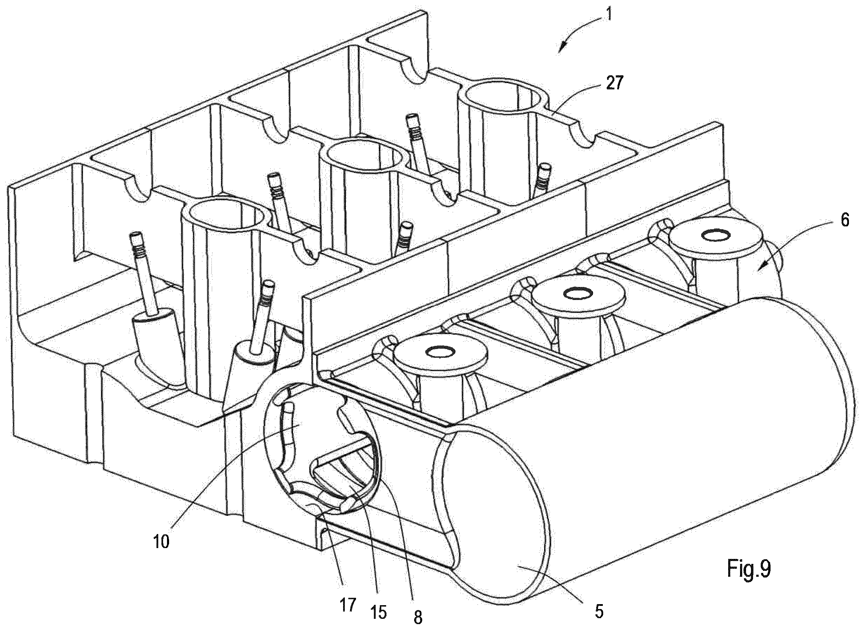

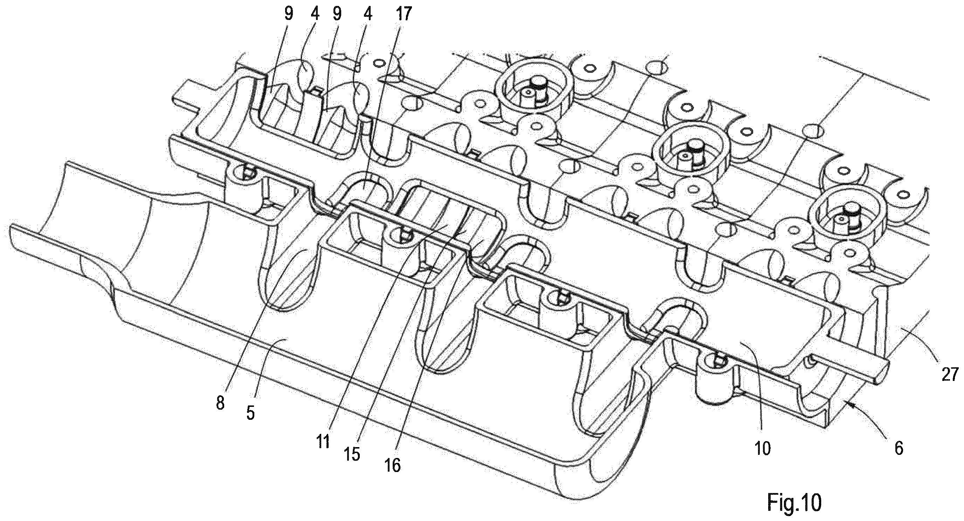

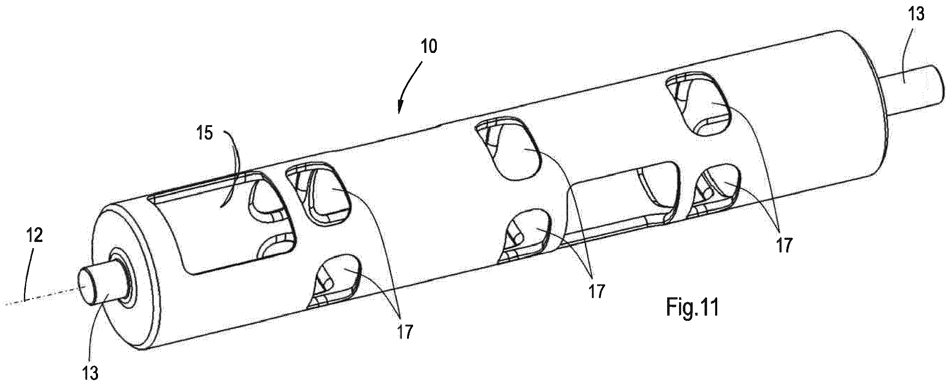

Figs. 7-11 show parts of another embodiment of the engine 1 according to the invention. Elements that are similar to elements of the embodiment as shown in Figs. 1-6 and described hereinbefore are indicated by the same reference signs. In this case the housing 7 is integrated in a cylinder head 27 of a four-cylinder engine 1. The cylinder head 27 is provided with four pairs of cylinder inlet passages 4 and the housing 7 of the rotary valve 6 has four corresponding pairs of outlet ports 9. The housing 7 is also provided with three inlet ports 8, see Fig. 9, each located between two neighbouring pairs of inlet passages 4. Fig. 11 shows the air guide cylinder 10 which comprises four outlet apertures 15 at the same axial locations along the axis of rotation 12 as the respective pairs of inlet passages 4. In rotational direction about the axis of rotation 12 the outlet apertures 15 have mutual phase shifts such that under operating conditions the actual position of each outlet aperture 15 with respect to the corresponding pair of outlet ports 9 corresponds to timing of the corresponding pair of inlet valves 3. Each of the outlet apertures 15 cyclically passes the corresponding pair of outlet ports 9 under operating conditions.

The air guide cylinder 10 is provided with a plurality of inlet apertures 17 positioned at three different locations in axial direction of the axis of rotation 12. In circumferential direction of the air guide cylinder 10 the inlet apertures 17 at one axial location are separated by wall portions such that the air guide cylinder 10 has sufficient rigidity, but the separating wall portions are small enough to have a continuous fluid connection between the outlet apertures 15 and the inlet ports 8 under operating conditions. In this case the opposite axial ends of the air guide cylinder 10 are closed by respective frontal walls to which sections of the drive shaft 13 are fixed.

The embodiment as shown in Figs. 7-11 has four separate control cylinders 11 which surround the air guide cylinder 10 and are located at a distance from each other along the axis of rotation 12. Each of the control cylinders 11 has a pair of control apertures 16 and is rotatable with respect to the housing 7 about the axis of rotation 12 in order to set a desired position of the pair of control apertures 16 with respect to the corresponding pair of outlet ports 9. Each of the control cylinders 11 comprises an external gear 18 which can be driven by an electric motor. Independent adjustment of the rotational positions of the control cylinders 11 is desired for certain applications, for example in case of an engine including HCCI technology.

Each of the control cylinders 11 of the embodiment as shown in Figs. 7-11 can be operated in a similar way as described hereinbefore in relation to the embodiment as shown in Figs. 1-6.

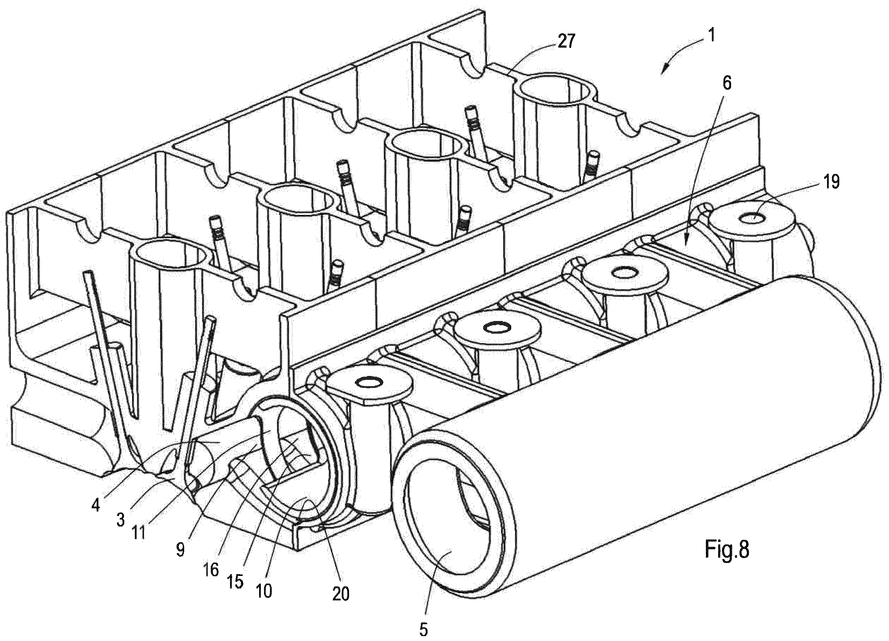

It is noted that when running the engine 1 as shown in Fig. 7-11 at low load or idle three engine cylinders 2 may be switched-off by closing the corresponding outlet ports 9 of the rotary valve 6 by means of the respective control cylinders 11. Fig. 8 shows that the outlet port 9 at the first engine cylinder is provided with a tapered shape at its opening edge 20 in order to be able to control the airflow accurately by adjusting the rotational position of the corresponding control cylinder 11. This means that only one of the outlet ports 9 needs to be provided with the tapered shape.In order to avoid undesired air leakage under operating conditions the air guide cylinder 10 and the control cylinder 11 fit in a sealing manner to each other and to the housing 7.

The invention is not limited to the embodiments shown in the drawings and described hereinbefore, which may be varied in different manners within the scope of the claims and their technical equivalents.

## Claims

1. An internal combustion engine (1) comprising an engine cylinder (2) and a cylinder inlet passage (4) which cyclically communicate with each other via an inlet valve (3), an air inlet (5) and a rotary valve (6), wherein the rotary valve (6) has a housing (7) including a first port (8) which is in fluid connection with one of the air inlet (5) and the cylinder inlet passage (4) and a second port (9) which is in fluid connection with the other one of the air inlet (5) and the cylinder inlet passage (4) and a rotatable hollow air guide cylinder (10), which is mounted in said housing (7) and drivable with respect to the housing (7) about an axis of rotation (12), wherein the air guide cylinder (10) has a first aperture (15) in a cylindrical wall thereof which cyclically passes the second port (9) under operating conditions and a second aperture (17) through which the first aperture (15) communicates with the first port (8), and a control system for adjusting timing of at least one of opening and closing a passageway between the first port (8) and the second port (9), **characterized in that** the control system is provided with a curved valve plate (11) which is disposed in the housing (7) at the axial position of the first aperture (15) along the axis of rotation (12) and which extends concentrically with respect to the air guide cylinder (10), and wherein the rotational position of the valve plate (11) with respect to the housing (7) is adjustable about said axis of rotation (12) so as to be able to close at least a portion of the flow area through the first aperture (15) and the second port (9) when the first aperture (15) passes the second port (9).

2. An internal combustion engine (1) according to claim 1, wherein the first port is an inlet port (8) which is in fluid connection with the air inlet (5) and the second port is an outlet port (9) which is in fluid connection with the cylinder inlet passage (4), and wherein the first aperture is an outlet aperture (15) and the second aperture is an inlet aperture (17), allowing air to flow from the air inlet (5) to the cylinder inlet passage (4) successively via the inlet port (8), the inlet aperture (17), the outlet aperture (15) and the outlet port (9).

3. An internal combustion engine (1) according to claim 1 or 2, wherein the valve plate (11) is located at the outer side of the air guide cylinder (10).

4. An internal combustion engine (1) according to any one of the preceding claims, wherein the valve plate is a portion of a cylindrical wall of a hollow control cylinder (11) which has a control aperture (16) in its cylindrical wall and wherein said portion is located at the axial position of the first aperture (15) along the axis of rotation (12) and adjacent to the control aperture (16) in circumferential direction of the control cylinder (11).

5. An internal combustion engine (1) according to any one of the preceding claims, wherein the first aperture (15) is located at a distance from the second aperture (17) in axial direction of the axis of rotation (12).

6. An internal combustion engine (1) according to any one of the preceding claims, wherein the control system is adapted for adjusting timing of closing a passageway between the first port (8) and the second port (9) via the first aperture (15).

7. An internal combustion engine (1) according to any one of the preceding claims, wherein the housing (7) is provided with a stop (26) which defines a maximum rotational position of the valve plate (11) with respect to the housing (7).

8. An internal combustion engine (1) according to claims 4 and 7, wherein the control cylinder (11) surrounds the air guide cylinder (10) and the stop (26) comprises a protrusion which protrudes in the control aperture (16).

9. An internal combustion engine (1) according to any one of the preceding claims, wherein the housing (7) is integrated in a cylinder head (27) of the engine (1).

10. An internal combustion engine (1) according to any one of the preceding claims, wherein the second port (9) has opposite edges (20, 21) as seen in rotational direction about the axis of rotation (12), whereas the width of the second port (9), as measured in axial direction of the axis of rotation (12), narrows towards one of the edges (20, 21).

11. An internal combustion engine (1) according to any one of the preceding claims, wherein the engine (1) is a multi-cylinder engine, and wherein the rotary valve (6) comprises a plurality of second ports (9) and at least a same number of curved valve plates (11).

12. An internal combustion engine (1) according to claim 11, wherein the curved valve plates (11) are fixed to each other.

13. An internal combustion engine (1) according to any one of the claims 1-10 and claim 2, wherein the engine (1) comprises a second engine cylinder (2) and a corresponding second cylinder inlet passage (4) which cyclically communicate with each other via a second inlet valve (3), wherein the housing (7) of the rotary valve (6) is provided with a second outlet port (9) which is in fluid connection with the second cylinder inlet passage (4), and wherein the air guide cylinder (10) has a second outlet aperture (15) in the cylindrical wall thereof which cyclically passes the second outlet port (9) under operating conditions and wherein the inlet aperture (17) is located in the cylindrical wall of the air guide cylinder (10) between the first and second outlet apertures (15) in axial direction of the axis of rotation (12) such that the inlet aperture (17) cyclically passes the inlet port (8) under operating conditions, wherein the control system is provided with a second curved valve plate (11) which is disposed in the housing (7) at the axial position of the second outlet aperture (15) along the axis of rotation (12) and which extends concentrically with respect to the air guide cylinder (10), and wherein the rotational position of the second valve plate (11) with respect to the housing (7) is adjustable about said axis of rotation (12).

14. An internal combustion engine (1) according to claim 13, wherein each of the outlet port (9) and second outlet port (9) has opposite edges (20, 21) as seen in rotational direction about the axis of rotation (12), whereas the width of only one of the outlet port (9) and second outlet port (9), as measured in axial direction of the axis of rotation (12), narrows towards one of the edges (20, 21).

15. A rotary valve for an internal combustion engine (1), comprising a housing (7) including a first port (8) and a second port (9) and a rotatable hollow air guide cylinder (10), which is mounted in said housing (7) and rotatable with respect to the housing (7) about an axis of rotation (12), wherein the air guide cylinder (10) has a first aperture (15) in a cylindrical wall thereof which cyclically passes the second port (9) upon rotating the air guide cylinder (10) and a second aperture (17) through which the first aperture (15) communicates with the first port (8), and a control system for adjusting timing of at least one of opening and closing a passageway between the first port (8) and the second port (9), **characterized in that** the control system is provided with a curved valve plate (11) which is disposed in the housing (7) at the axial position of the first aperture (15) along the axis of rotation (12) and which extends concentrically with respect to the air guide cylinder (10), and wherein the rotational position of the valve plate (11) with respect to the housing (7) is adjustable about said axis of rotation (12) so as to be able to close at least a portion of the flow area through the first aperture (15) and the second port (9).
